# EUROPEAN PATENT APPLICATION

(11) **EP 3 734 919 A1**
(43) Date of publication of application: **04.11.2020**
(21) Application number: 19305557.1
(22) Date of filing: 30.04.2019
(51) Int. Cl.: H04L 12/815, H04L 12/851, H04L 12/841, H04L 12/833

(54) **IN-BAND SIGNALLING FOR DYNAMIC TRANSMISSION TIME WINDOW CONTROL**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: MANGIN, Christophe, 35708 Rennes Cedex 7 (FR)
(74) Representative: Plasseraud IP

(57) **Abstract**

The invention relates to transmission of communication signal frames by a communicating entity in a packet-switched network, the communicating entity comprising an egress port for transmitting communication signal frames. The frames comprise a first type of frames, intended to be transmitted in a plurality of bursts for which a traffic shaping is defined as an express traffic, and a second type of frames, for which no traffic shaping is defined, as a sporadic traffic. The communicating entity is configured for storing a plurality of first queues of frames of the first type, associated respectively to the aforesaid plurality of bursts, and at least one second queue for frames of the second type.

The bursts are stored in respective first queues with a signaling frame preceding each burst, and this signaling frame comprises a timestamp of generation of said burst. Then, for selecting a first burst to transmit among the bursts stored in said first queues, the communicating entity is configured for:
- Reading the timestamp of each signaling frame located at a head of each first queues,
- Determining among all the signaling frames the one having the most ancient timestamp, and
- Select the burst having the thus determined signaling frame as the first burst to transmit.

## Description

The present invention relates to telecommunications and more particularly to data frames transmission.
Packet-switched networks are increasingly used for industrial control application thanks to the introduction of Layer-2 features allowing control data transport with tightly bounded latency and transfer delay variation.
For instance, low-latency sampling data, (closed loop) control and image streaming (e.g. for real-time image processing) have very stringent latency requirements. Image streaming and associated processing as a part of a control loop has greater requirements than best effort transport could provide in a converged network.
In parallel, best effort stream is not time-critical, but provides a constant source of interference for the time-critical streams.
Solutions have been progressively developed, in particular for the adaptation of switched Ethernet to the requirements of industrial field busses: EtherCAT, Ethernet Powerlink, TCnet, PROFINET, etc.

All these solutions rely on specific additions to the standard Ethernet protocol that provide support for scheduled streams and in particular those constituting cyclic communications.
The common scheme, used by these adaptations, recourses to an organization of the transmission multiplex in time windows, each window being reserved for a specific stream. The number and repetition frequencies of the time windows are determined according to the requirements of the applications.

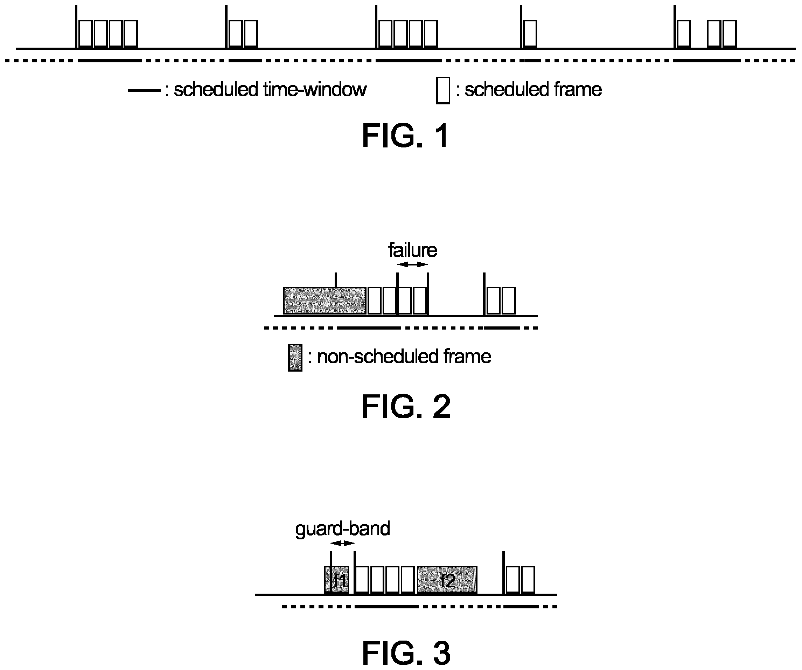

Considering that the typical applications generating (industrial control for instance) scheduled streams have a periodic activity, the transmission multiplex end up being organized in periodic cycles, each cycle containing a series of time windows reserved for scheduled (low-latency) streams and a series of time windows reserved for non scheduled streams (represented with dashed lines in the example of figure 1).

To even further reduce potential sources of latency due to the interference between scheduled and non-scheduled streams, pre-emption mechanisms are also introduced. Preemption intervenes at the transition between a non-scheduled stream time window and a scheduled stream time window. The "scheduled stream" is also called hereafter "express traffic". The "non-scheduled stream" is also called hereafter "sporadic traffic" or simply "normal streams" in TSN standards ("TSN" is for "Time Sensitive Networking" in *"Preemption"*: IEEE 802.3 Clause 99, IEEE 802.1Q) and a scheduled stream (called "express streams" in TSN standards).

Upon such a transition between non-scheduled stream and scheduled stream, the beginning of a scheduled stream can be concurrent with the end of the transmission of a frame started during the prior non-scheduled stream time window. In such a case, the scheduled frame cannot be transmitted until the current non-scheduled frame transmission ends.

This situation is shown on figure 2 where, in the presented example, two scheduled frames are out of the scheduled timing.

By pre-empting the transmission opportunity of the residual part of the non-scheduled frame, it is possible to avoid the additional delay to be imposed to the scheduled stream. To facilitate the preemption operation, the non-scheduled frame can be fragmented (in f1 and f2 as shown in the example of figure 3) causing the transmission of the remaining fragment(s) to be delayed until the scheduled stream transmission is complete.

In an effort to provide a single standard for the support of a converged network capable of transporting all types of streams, the IEEE has defined two mechanisms:
- a scheduling scheme relying on the reservation of time windows for different types of streams (scheduled and non-scheduled), as specified in standard 802.1Qbv;
- a pre-emption scheme that specifies the fragmentation schemes of so called "normal" frames upon the concurrent transmission of so called "express" frames, as presented in standards 802.3br and 802.1bu.

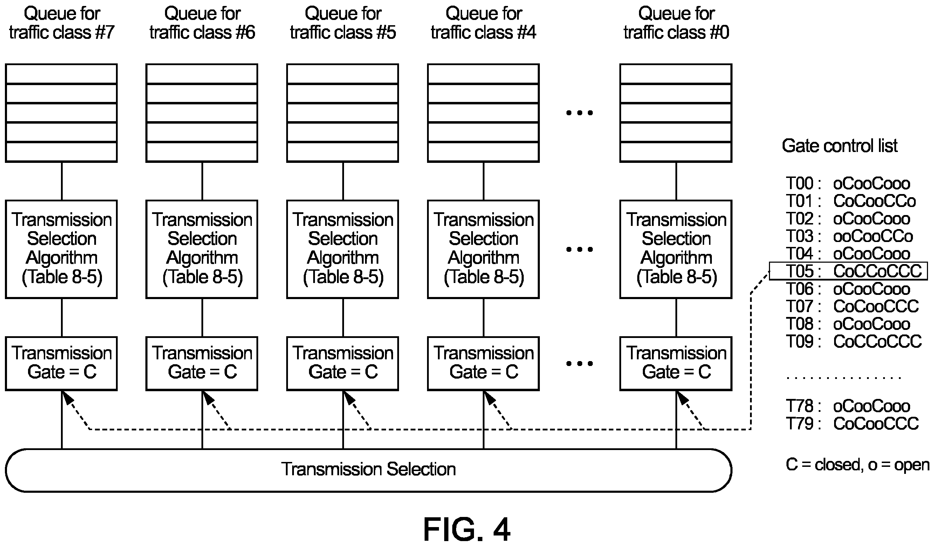

802.1Qbv is based on a periodic calendar table, of which each entry defines a time window reserved for the transmission of a particular class of stream, e.g. scheduled or non-scheduled, as shown on figure 4.

These standards provide then a complete framework for the transport of periodic scheduled streams with minimal latency that can provide similar services to those provided by the industrial standards cited above.

More generally, the implementation of synchronised time windows on different links throughout a network requires:
- the use of a centralized configuration tool that computes and solves off-line the allocations of resources along the links and ports conveying the scheduled streams,
as well as the availability of:
- standardised or well characterised bridges and end-station timing characteristics in terms of clock accuracy, latency and jitter,
- the timing characterisation of each link,
so that the configuration tool can produce a consistent resource allocation over the stream paths.

In addition, the obtained network configuration can only be changed by performing a new off-line computation and redistributing the new configuration to all the involved nodes. Such a rigid scheduling scheme is then reserved to the streams supporting applications with very stringent timing constraints (latency and jitter) and in network of limited topology complexity, like lines or busses.

Implementing scheduled stream through the standard 802.1Qbv also imposes some limitations due to the nature of the calendar table used to define the different time windows reserved to scheduled streams. Typically, standard 802.1Qbv relies on a finite list of gate open/gate close commands that are sequentially and periodically (the execution starts over at the beginning of the list once the end of the list is reached) executed. The occurrence of each time window is then necessary periodic and its period is an integer fraction of the cycle defined by the duration of the execution of the whole list.

The present invention aims to improve the situation.

To that end, it proposes a method implemented by computer means of a communicating entity in a packet-switched network, said communicating entity comprising at least one egress port for transmitting communication signal frames, said frames comprising:
- a first type of frames, intended to be transmitted in a plurality of bursts for which a traffic shaping is defined as an express traffic, and
- a second type of frames, for which no traffic shaping is defined, as a sporadic traffic,
the communicating entity being configured for storing:
- a plurality of first queues of frames of the first type, said first queues being associated respectively to said plurality of bursts, and
- at least one second queue for frames of the second type.

More particularly, the aforesaid bursts are stored in respective first queues with a signaling frame preceding each burst, and said signaling frame comprises a timestamp of generation of said burst, and, for selecting a first burst to transmit among the bursts stored in said first queues, the communicating entity is configured for:
- Reading the timestamp of each signaling frame located at a head of each first queues,
- Determining among all the signaling frames the one having the most ancient timestamp, and
- Select the burst having the thus determined signaling frame as the first burst to transmit.

It is then proposed another way of allocating reserved time windows through a network without having recourse to centralized computation and configuration, which relies on a series of node and link timing parameters which characterisation may lead to over-conservative computation rules and networking resource waste.

In an embodiment, during a transmission of said first burst, second type frame transmission is postponed as long as said first burst transmission has not completed.
Similarly, in an embodiment, during a transmission of said first burst, first type frame transmissions of first type queues other than the queue of the first burst are postponed as long as said first burst transmission has not completed.

In an embodiment, once the first burst to transmit is selected from transmission, before the transmission of the first burst:
- it is determined whether a frame of the second type is being transmitted by the egress port, and if yes,
- a fragment of that second type frame, having a predetermined minimum size, is scheduled for a next transmission of said egress port, just before the transmission of said first burst.
Details of such a minimum fragment size can be found in document WO2018/174302.

Typically, said queues (first and second) can be stored in first-in-first-out memory buffers.

In an embodiment, a plurality of communicating entities are provided in said network as transmitters of said first type frame bursts, and each of said communicating entities is configured to add a timestamp of generation of a first type frame burst in a corresponding signaling frame, according to a common clock reference in said network.

In that embodiment, some of these communicating entities can act as emitters of said bursts and said timestamp of generation is then a timestamp of creation of the corresponding burst.

In that embodiment furthermore, some of these communicating entities can act as transponders of said bursts (called also "bridges" in the following of the present specification) and said timestamp of generation is still a timestamp of creation of the corresponding burst.

Therefore, thanks to this embodiment, even if a first type frame burst is to be transmitted with many hops and by many successive transmitting entities, this burst transmission through the network will have a priority over transmissions of more recent first type frame bursts.

In an embodiment, the signaling frame further comprises data corresponding to a first number of data in the whole first frames of said first burst, and the communicating entity is further configured, during a transmission of frames of said first burst, for:
- counting a second number of transmitted data of said first burst,
- and continuing the transmission of data of the first burst until the second number reaches the first number.

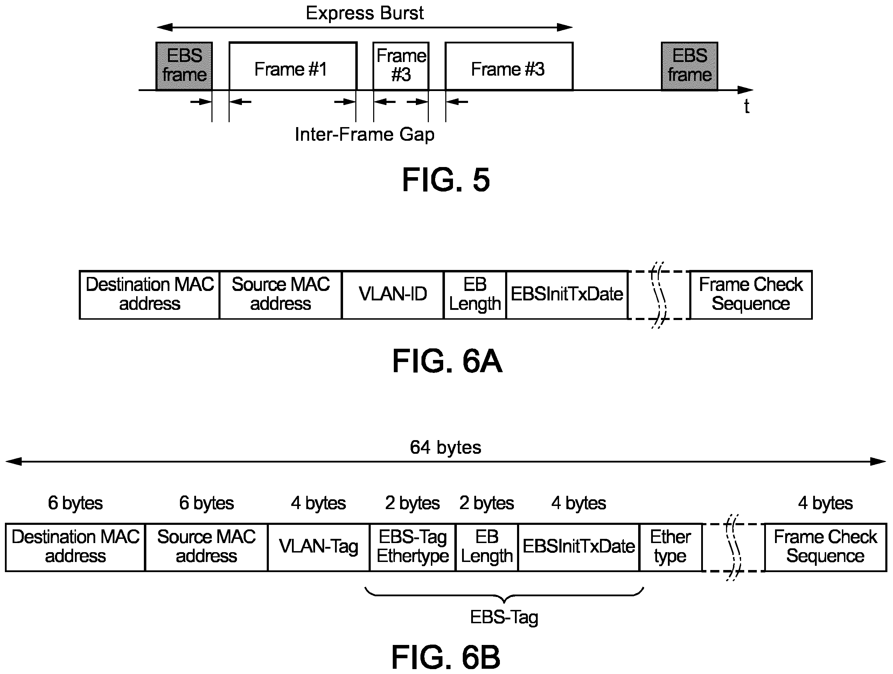

As presented in figure 5 commented below, first type frames of a same burst might have different lengths (and then different "numbers of data" therein). It is then chosen in this embodiment to count finally the number of data that the burst has (or its total "length"), minus possibly the content of the EBS frame.

This embodiment makes it possible to keep the transmission scheduling.

Typically, in that embodiment, the communicating entity can be further configured for, when said second number reaches the first number:
- ending the transmission of data of the first burst, and
- flushing from the corresponding first queue any possible remaining data of the first burst.

In an embodiment, different bursts in a same first queue are delineated by respective signaling frames of said bursts.

Then, when an end of a burst is reached, even if the queue is not fully empty, the next frame should be a signaling frame or is to be flushed otherwise according to the previous embodiment here above.

In an embodiment, the signaling frame can be an Ethernet frame including at least one tag constituted of one Ethertype field declaring data of the tag, said data corresponding to at least said timestamp (and possibly also some of these data can be related to the first total number of data in the burst as explained above).

This embodiment makes it possible to reserve other Ethertype fields (also declared by other tags) for any other data type in the signaling frame.

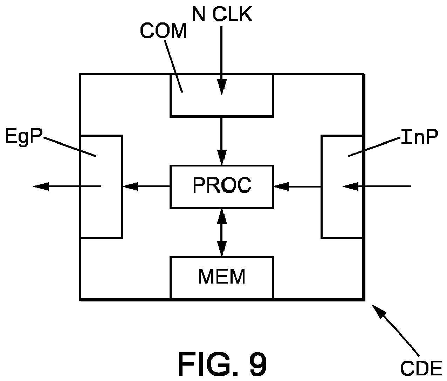

The invention also aims at a communicating entity of a packet-switched network comprising a computing circuit configured to implement at least a part of a method as presented above (an example of embodiment of such a computing circuit is shown in figure 9 commented below).

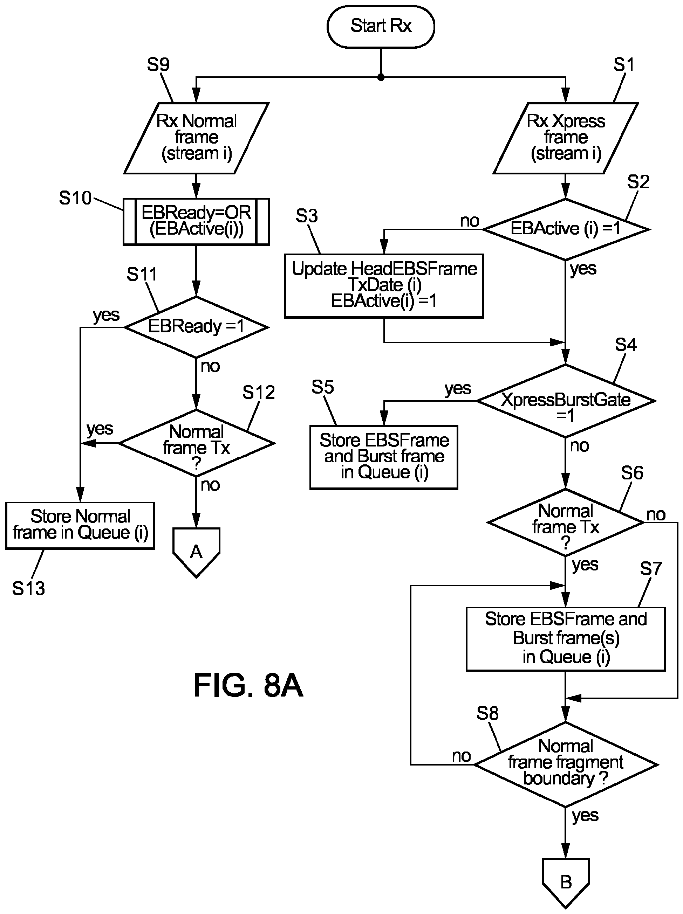

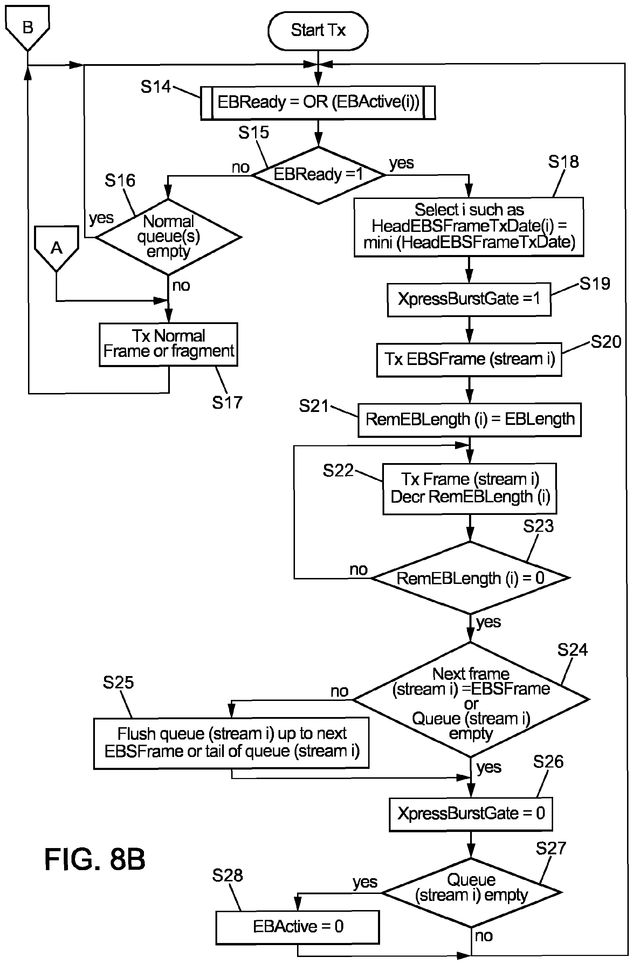

The invention aims also at a computer software, comprising instructions to implement at least a part of a method as presented above when the software is executed by a processor (an example of flowchart of such a computer program is shown in figures 8A and 8B commented below).

The invention aims also at a computer-readable non-transient recording medium on which a software is registered to implement a method as presented above when the software is executed by a processor.

Other features, details and advantages will be shown in the following detailed description and on the figures, on which, in addition to figures 1 to 4 already commented above:
- figure 5 shows an example of a first queue content, that first queue comprising here several express bursts separated by respective signalling frames (designated as "EBS" frames);
- figures 6A and 6B show examples of a signalling frame structures according to two respective embodiments;
- figure 7 shows schematically an example of architecture of an egress port having different first type (express stream) and second type (normal stream) queues to manage;
- figures 8A and 8B are flow charts of an example of embodiment of main steps of a method according to the present specification;
- figure 9 shows schematically an example of a computing circuit of a communicating entity according to the present specification.

The invention targets so-called Real Time Ethernet networks such as those used in industrial automation, in-vehicle control or train control applications. It proposes to organise "Express Bursts" (in the sense defined by the Ethernet TSN standards on pre-emption) of frames of low latency communications as a train of frames delineated by specific short frames used each to signal the beginning of each Express Burst. This explicit in-band Express Burst delineation is used to trigger preemption operations on "Normal frames" (as defined in TSN standards on pre-emption) possibly interfering with the Express Bursts and to manage possibly the multiplexing of simultaneous incident Express Bursts.
The transmission of the express burst can be synchronised with a cycle common to the whole network. In that case, the express bursts can be sent by the so-called "Talkers" (emitters) at a given common time during the cycle and are multiplexed in the ports where they collide using the explicit delineation provided by the burst delineation frames.

The invention allows to flexibly organize the transmission multiplex in Express and Normal phases without having recourse to transmission windows which opening and closing times are rigidly synchronised between all participants of the communication (Talker, Listeners and bridges).

Hereafter:
- the word *"**Talker**"* refers to an end station that is the source or producer of a stream;
- the word *"**Listener**"* refers to an end station that is the destination, receiver, or consumer of a stream;
- the word *"**Bridge**"* refers to an intermediate node in the network, receiving a frame from a talker (or a bridge) and transmitting that frame to a listener (or a bridge);
- the word *"**Stream**"* refers to a unidirectional flow of data from a Talker to one or more Listeners;
- the wording *"**Express Burst**"* refers to series of frames **preceded by an Express Burst Start (EBS) frame**. The frames belonging to an Express Burst are sent as a succession of frames, back to back;
- the wording *"**Express Burst Start frame**"* refers to a frame inserted at the beginning of an Express Burst;
- the wording *"**Express Burst Gate**"* refers to a signal (or status), local to a port, indicating that an Express Burst is being transmitted.

All the end-stations and bridges of the network maintain a common reference time (for example from a clock of the network) thanks to a protocol such as for example IEEE 802.1AS(-Rev) or IEEE 1588.

When a Talker generates an express stream, it organizes the produced series of frames in Express Bursts by inserting an EBS frame at the beginning of the series of frames.

As shown in figure 5, all frames of an Express Burst, including the EBS frame, are transmitted back to back (frame#1,frame#2,frame#3), for example separated only by a minimum predetermined Inter Frame Gap, as the one specified for example by the Medium Access standard IEEE 802.3.

When a Listener receives an Express Burst, it identifies and discards the EBS frame and passes the valid frames of the Express Burst to the upper layer.

In a general embodiment shown in figure 6A, the EBS frame can include typically data such as:
- a destination MAC address,
- a source MAC address,
- possibly a VLAN-ID,
- according to the embodiments presented above:
   * the timestamp of creation of the burst, referenced as *EBSInitTxDate* in figure 6A,
   * and its length referenced as *EBLength* in figure 6A (i.e. the total number of data comprised in the burst).

In the Ethernet background, the EBS frame can have a structure as the one shown in figure 6B and can have for example a minimal size of a standard Ethernet fame (64-byte long) and includes then same information (of layer 2 typically) as the frames of the stream, i.e.:
- a destination MAC address
- a source MAC address, and
- a VLAN-Tag, and possibly
- other Tags identified by their respective Ethertypes.

However, they are distinguished from the other frames of the burst by an additional tag identified by a specific Ethertype value (EBS-Tag Ethertype), as shown in figure 6B.

The EBS-Tag includes three pieces of information (including the EBS-TagEthertype field):
- *EBLength*: the length of the Express burst of frames, excluding the EBS frame itself, expressed for example as a number of bytes,
- *EBSInitTxDate*: the initial transmission date of the EBS frame, inserted by the above-said "Talker", relative to a time which is common to the whole network (given for example by a reference clock in the network).

The available payload in the EBS frame can possibly be used for any other application (e.g. network control) signaled by its own Ethertype following the EBS-Tag.

Here after is described the operation of a bridge receiving an Express Burst on an ingress port and transmitting that Express Burst on an egress port. Typically, all the frames belonging to an Express Burst are filtered and forwarded from the ingress port(s) of a bridge (as the other received frames). The processing of the Express Bursts takes place more particularly in the egress port(s) of the bridge.

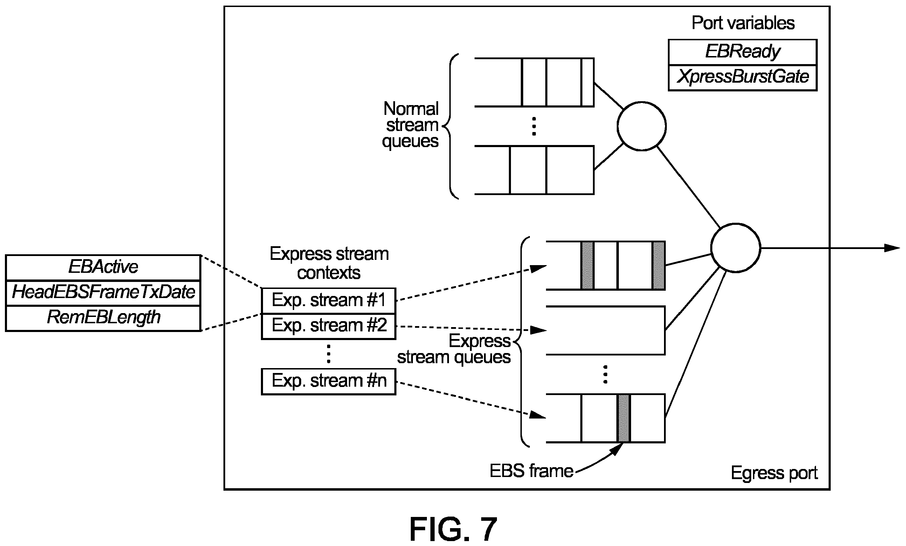

As shown in figure 7, the frames of an Express Burst are stored in a dedicated per-Express-stream queue in the destination egress port, in FIFO order.

Normal frames are stored also in FIFO order in one or several queues allocated to the normal streams. The selection of the destination queue(s) is done based on criteria defined by network management (e.g. traffic class, priority, etc.).

For each Express Stream, the egress port maintains a context that, among other information related to the stream, contains the following Express Burst related data:
- *EBActive*: referring to activity of the Express Stream, and indicating that the Express Stream queue is not empty or an EBS frame of that stream is being received;
- *HeadEBSFrameTrxDate*: referring to the initial transmission date (indicated for example as a timestamp) of the EBS frame stored at the head of the stream queue. If an EBS frame is received on the egress port and the queue associated with the stream is empty, the initial transmission date contained in the EBS frame (*EBSInitTxDate*) is stored in *HeadEBSFrameTrxDate* in the stream context;
- *RemEBLength*: referring to length of the remaining part of an Express Burst to be transmitted. The value of this parameter is initialized upon transmission of an EBS frame with the value stored in its *EBLength* field. It is continuously decremented during the transmission of the subsequent Express Burst frames of a same burst and remains constant during transmission of one and same frame.

Furthermore, the egress port maintains two flags:
- *XpressBurstGate*: indicating that the port is currently transmitting an Express Burst. *XpressBurstGate* is set upon transmission of an EBS frame by the egress port and reset when *RemEBLength* reaches zero;
- *EBReady*: indicating that at least one Express Burst is ready for transmission on the port, i.e. at least one of the Express stream queue is not empty. If *EBReady* is not set and an EBS frame is received, *EBReady* is set.

The egress port operation of a node of the network (here relaying a frames burst) can be described with reference to figures 8A and 8B as follows. Figure 8A refers to steps performed upon reception (Start Rx) of frame bursts, while figure 8B refers to steps to be performed for transmitting (Start Tx) frame bursts.

In this example, as a general rule, no other normal frame or frame belonging to an express stream can be transmitted as long as the current Express Burst transmission has not completed.

Therefore, in steps S1 and S9, a distinction is operated between the normal traffic frames to transmit (or to receive (step S9) and retransmit) and express frames to transmit (or to receive (step S1) and retransmit).

In any case, the node reads the received frames and determines whether an EBS frame (signaling then the start of an Express Burst) is received on the egress port.

If yes, this means that an express burst is present and ready to be sent from the egress port. Therefore, in test S2, if the variable EBActive=1, this means that at least one express frame is present to be sent and if furthermore the flag XpressBurstGate is set to 1 (in step S4) meaning that the egress port would be ready to send express frames (and is not currently used for normal traffic), then in step S5 the received express burst frames (both the express frames burst and the EBS frame at the head of it) can be set aside and stored in a FIFO-type queue (i) for future transmission (B) as described below with reference to figure 8B.

Otherwise, if the flag XpressBurstGate is set to 0 (in step S4) while express frames are to be sent (arrow yes from test S2), then a normal traffic is deemed to be currently transmitted but should be interrupted, with possibly a latest fragment of a normal frame to be transmitted (as previously explained with reference to figure 3). Then, in step S6, it is determined whether a normal frame transmission is currently performed. If yes, the received express frames burst is set aside in a queue (i) in step S7 (like in previously explained step S5). Otherwise, a latest fragment of a normal frame is transmitted and, then, in step S8, when the transmission of the end of that fragment of a normal frame is reached (the total length of a fragment being predetermined), transmission of express frames can finally occur (B) as described below with reference to figure 8B.

The minimal size of a fragment to transmit possibly in step S8 is the one for example presented in document WO2018/174302.

As for the processing of normal traffic at its reception (step S9), at first, it is determined in step S10 whether an express burst has been received already (if yes: EBReady=1 in step S11). If yes, then, the normal traffic frames are set aside and stored in step S13 in a FIFO-type queue (i) for a future transmission, because of the preemption of the express traffic over the normal traffic. If no express burst has been received (EBReady =0 in step S11), then normal traffic transmission can occur (A) unless transmission of a normal traffic coming from a former queue is being performed already (arrow yes from step S12: in this case, the currently received normal frames burst is stored in a temporization queue in step S13).

Referring now to figure 8B (for the transmission part of the process), if no express frame is ready to be transmitted in steps S14 and S15 (EBReady = 0), then normal traffic can be sent (arrow no from test S16) in step S17. Otherwise (EBReady = 1), express burst frames are to be transmitted and, in order to determine from which queue express frames are to be transmitted at first, step S18 is performed as follows. The express stream queue which is selected for a next transmission is such that the EBS frame at the head of the express stream queue has the lesser *HeadEBSFrameTrxDate.* Then, the flag XpressBurstGate is set to 1 in step S19, and the frames of that queue are transmitted in step S20.

Furthermore, a counter RemEBLength(i) is initialized at step S21 with the value read from the *EBLength* field in the EBS frame. Each subsequent frames of the Express Burst corresponding to that EBS frame is transmitted at the link speed in step S22 and RemEBLength(i) is decremented of the value of the frame length expressed in bytes. When RemEBLength(i) reaches zero (in step S23), this situation should correspond to the end of that express burst with this current EBS frame. Two types of situations can happen then (test S24):
- The full queue (i) of that express burst is empty, or
- The next express burst in the same queue (i) starts with a new EBS frame (i.e. the next first frame of the same queue (i) is an EBS frame).

If one of these two situations is encountered, the Express Burst gate can be reset to zero (*XpressBurstGate* = 0) in step S26, meaning that the egress port is currently not active for Express frames transmission. A next step then can be the transmission of a normal frame or fragment if any or possibly another Express stream queue content (if any as tested in step S27). More particularly, if all the express stream queues are empty in test S27 then the flag EBActive can be set to 0.
If none of the above said two situations is encountered in test S24, meaning that *RemEBLength* reaches zero while the whole express burst transmission has not completed, then an error has occurred. Any current transmission of a frame from that queue is then aborted and this queue (i) is flushed (in step S25) up to the next EBS frame or totally flushed if no EBS frame is present in the queue (i).

The algorithm corresponding to figures 8A and 8B can finally be summed up as follows:
If an EBS frame is received on the egress port and *EBActive* = 0 (the queue allocated the stream is empty), *EBActive* is set to 1.
If *XpressBurstGate* = 1, i.e. an Express Burst is being transmitted, the incoming EBS frame and possibly the following frames of the burst are stored in a corresponding Express Stream queue. If the corresponding Express stream queue is empty, the Express Stream context's *HeadEBSFrameTxDate* variable is set with value of the EBS frame's *EBSInitTxDate* field.
If *EBReady* is set to 1, the incoming Normal streams are stored in respective queues.
Whenever *EBReady* is not set to 1 and the Normal stream queues are not all empty, a frame or fragment at the head of one of the Normal stream queues or the currently received Normal frame or fragment is selected for transmission (according to rules fixed by network management).
Else if *EBReady* is set to 1:
If *XpressBurstGate* = 0 and no normal frame is currently transmitted, the EBS frame at the head of the ES queue with the lesser *HeadEBSFrameTxDate* is transmitted and the Express Burst transmission gate is open (*XpressBurstGate* = 1) to reserve the whole port capacity for the transmission of the subsequent frames belonging to the Express Burst.
If *XpressBurstGate* = 0 and a normal frame is being transmitted, the latter is pre-empted according to 802.3br and 802.1bu standards. The EBS frame is then transmitted after the end of the normal frame fragment resulting from the pre-emption operation and *XpressBurstGate* is set to 1.

Relatively to the aforesaid decrementing, once an EBS frame is transmitted, the *RemEBLength* data in the stream context is initialized with the value read from the *EBLength* field in the EBS frame. Each subsequent frames of the Express Burst is then transmitted and *RemEBLength* is decremented of the value of the frame length. When *RemEBLength* reaches zero, the Express Burst gate is reset (*XpressBurstGate* = 0). If *RemEBLength* reaches zero during the transmission of an express frame, the latter is aborted. If the corresponding Express stream queue is not empty and the frame at its head is not an EBS frame, the queue is flushed up to the next EBS frame or totally flushed if no EBS frame is present in the queue.
If, after the Express Burst transmission, the Express Stream queue is not empty, the Express Stream context's variable *HeadEBSFrameTxDate* is updated with the value contained in the *EBSInitTxDate* field of the new EBS frame stored now at the head of the queue.
*EBactive* is reset to 0 if the Express Stream queues are all empty.

The protocol can be operated according to cyclic communications implementation over the network according to any current application requirement. It is thus assumed that the same cycle is applied to all the links in the network. In such a configuration, taking benefit of the common clock distribution, all Talkers can be synchronized on this cycle and can organize their transmissions according to this cycle. In a possible implementation then, all the Talkers send their Express Bursts at the beginning of the cycle, each with a different offset from the cycle start. This offset is reflected by the *EBSInitTxDate* included in the EBS frame at the head of the Express Bursts. This offset indication is then used by each bridge node to multiplex the Express Bursts when they are forwarded onto a common link.

The invention makes it possible then to provide ultra-low latency data transfer to time-critical applications without having to use static off-line configuration. Typically, it can be applied in embedded control networks such as industrial or automotive networks.

A possible implementation of a communicating device according to the invention (such as a "bridge" for example as explained above) is presented in figure 9. Such a device can include a processing circuit for implementing the steps of a method according to the invention, for example as described above in the embodiment of figures 8A and 8B. That processing circuit can include typically:
- An egress port EgP to transmit frames as described above with reference to figure 8A and 8B,
- Possibly an ingress port InP to receive frames (and possibly retransmit from the egress port EgP at least some of them),
- A memory MEM for storing at least instructions of a computer program according to the invention (and possibly also for example frames according to FIFO-type queues),
- A processor PROC accessing to memory MEM for reading the aforesaid instructions and execute then the method of the invention,
- An input interface COM for receiving typically a clock data NCLK which is a common reference in the network (and which can be provided for example by a communicating clock device provided in the network. That reference NCLK enables the communicating device CDE to add a timestamp in a field of an EBS frame when such an EBS frame (and a corresponding following burst of express frames) is generated by the communicating device CDE for future transmission.

For simplicity and clarity of illustration, the drawing figures illustrate the general manner of construction, and descriptions and details of well-known features and techniques may be omitted to avoid unnecessarily obscuring the discussion of the described embodiments of the invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive, SSD drives), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

As used herein, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

For the purposes of the present subject disclosure, a "network" should be understood to refer to a network that may couple devices (also referred to herein as "nodes" or "communicating entities") so that data communications may occur between such devices, including between wireless devices coupled via a wireless network, for example. A network may also include mass storage, such as network attached storage (NAS), a storage area network (SAN), or other forms of computer or machine readable media, for example, as well as a clock counter so as give a clock reference to the devices. Various types of devices, for example gateways, may be made available to provide an interoperable capability for differing architectures or protocols used in the network. Any number of nodes, devices, apparatuses, links, interconnections, etc. may be used in a computer network according to the present specification.

A computing device of a network, for example a sensor node or an actuator node, may be capable of sending or receiving signals, such as via a wired or wireless network, and/or may be capable of processing and/or storing data.

It should be understood that embodiments of the present subject disclosure may be used in a variety of applications, in particular, although not limited to, industrial networks, such as industrial buses or sensor networks in which a potentially large number of sensors cooperatively monitor physical or environmental conditions at different locations (e.g. in a factory or a nuclear plant facility). Although the present subject disclosure is not limited in this respect, the methods disclosed herein may be used in many types of computer network with various topologies, such as, for example, any LLN network, any daisy-chain topology network, any vehicle bus network, any multiple-hop system, e.g. mesh network, any Internet of Things (IoT) network or system, any Machine-to-Machine (M2M) network or system, e.g. smart object networks, such as sensor networks, or any combination thereof, and may be used in many apparatuses such as in any network node of a computer network, such as, for example, a root node, a gateway node, a sensor node, an actuator node, or in any server connected to or comprised in the computer network.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method implemented by computer means of a communicating entity in a packet-switched network, said communicating entity comprising at least one egress port (EgP) for transmitting communication signal frames, said frames comprising:
- a first type of frames, intended to be transmitted in a plurality of bursts for which a traffic shaping is defined as an express traffic, and
- a second type of frames, for which no traffic shaping is defined, as a sporadic traffic,
the communicating entity being configured for storing:
- a plurality of first queues of frames of the first type, said first queues being associated respectively to said plurality of bursts, and
- at least one second queue for frames of the second type,
Wherein said bursts are stored in respective first queues with a signaling frame preceding each burst, and said signaling frame comprises a timestamp of generation of said burst,
And wherein, for selecting a first burst to transmit among the bursts stored in said first queues, the communicating entity is configured for:
- Reading the timestamp of each signaling frame located at a head of each first queues,
- Determining among all the signaling frames the one having the most ancient timestamp, and
- Select the burst having the thus determined signaling frame as the first burst to transmit.

2. The method of claim 1, wherein, during a transmission of said first burst, second type frame transmission is postponed as long as said first burst transmission has not completed.

3. The method according to any one of claims 1 and 2, wherein, during a transmission of said first burst, first type frame transmissions of first type queues other than the queue of the first burst are postponed as long as said first burst transmission has not completed.

4. The method according to any one of the preceding claims, wherein, once the first burst to transmit is selected from transmission, before the transmission of the first burst:
- it is determined whether a frame of the second type is being transmitted by the egress port, and if yes,
- a fragment of that second type frame, having a predetermined minimum size, is scheduled for a next transmission of said egress port, just before the transmission of said first burst.

5. The method according to any one of the preceding claims, wherein said queues are stored in first-in-first-out memory buffers.

6. The method according to any one of the preceding claims, wherein a plurality of communicating entities are provided in said network as transmitters of said first type frame bursts, and wherein each of said communicating entities is configured to add a timestamp of generation of a first type frame burst in a corresponding signaling frame, according to a common clock reference in said network.

7. The method of claim 6, wherein a part at least of said communicating entities act as emitters of said bursts and said timestamp of generation is a timestamp of creation of the corresponding burst.

8. The method of claim 6, wherein a part at least of said communicating entities act as transponders of said bursts and said timestamp of generation is a timestamp of creation of the corresponding burst.

9. The method according to any one of the preceding claims, wherein the signaling frame further comprises data corresponding to a first number of data in the whole first frames of said first burst, and wherein the communicating entity is further configured, during a transmission of frames of said first burst, for:
- counting a second number of transmitted data of said first burst,
- and continuing the transmission of data of the first burst until the second number reaches the first number.

10. The method of claim 9, wherein the communicating entity is further configured for, when said second number reaches the first number:
- ending the transmission of data of the first burst, and
- flushing from the corresponding first queue any possible remaining data of the first burst.

11. The method according to any one of the preceding claims, wherein different bursts in a same first queue are delineated by respective signaling frames of said bursts.

12. The method according to any one of the preceding claims, wherein the signaling frame can be an Ethernet frame including at least one tag constituted of one Ethertype field declaring data of the tag, said data corresponding to at least said timestamp.

13. A communicating entity of a packet-switched network comprising a computing circuit configured to implement at least a part of a method according to any one of the preceding claims.

14. A computer software, comprising instructions to implement at least a part of a method according to any one of the claims 1 to 12 when the software is executed by a processor.

15. A computer-readable non-transient recording medium on which a software is registered to implement a method according to one of claims 1 to 12 when the software is executed by a processor.
